(19) Europäisches Patentamt
European Patent Office
Office européen des brevets

(11) **EP 2 379 983 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(21) Anmeldenummer: **09740110.3**

(22) Anmeldetag: **20.10.2009**

(51) Int Cl.:
**G01C 3/08** (2006.01)     **G01S 7/481** (2006.01)
**G01S 17/08** (2006.01)

(86) Internationale Anmeldenummer:
**PCT/EP2009/063699**

(87) Internationale Veröffentlichungsnummer:
**WO 2010/069633 (24.06.2010 Gazette 2010/25)**

(54) **OPTISCHE EMPFÄNGERLINSE SOWIE OPTISCHER ENTFERNUNGSMESSER**

OPTICAL RECEIVER LENS AND OPTICAL DISTANCE MEASURING DEVICE

LENTILLE OPTIQUE RÉCEPTRICE ET TÉLÉMÈTRE OPTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.12.2008 DE 102008054790**

(43) Veröffentlichungstag der Anmeldung:
**26.10.2011 Patentblatt 2011/43**

(73) Patentinhaber: **Robert Bosch GmbH**
**70442 Stuttgart (DE)**

(72) Erfinder:
• **RICHARD, Matthieu**
  **F-25160 Remoray (FR)**
• **PAHUD, Cedric**
  **CH-1110 Morges (CH)**
• **HAASE, Bjoern**
  **70184 Stuttgart (DE)**

(56) Entgegenhaltungen:
**DE-A1- 19 804 059     DE-A1-102005 007 945**
**DE-A1-102005 043 418     DE-U1-202006 012 038**

## Beschreibung

Stand der Technik

Die Erfindung betrifft eine optische Empfängerlinse mit einer dreidimensionalen Linsenoberfläche gemäß dem Oberbegriff des Anspruchs 1 sowie einen optischen Entfernungsmesser, insbesondere einen Laser-Entfernungsmesser, gemäß Anspruch 5.

Verschiedenartige optische Entfernungsmesser sind in der US 2007/0030474 A1, der WO 03/002939 A1, der DE 10 051 302 C5, der WO 2005/064359 A1, der EP 00 701 702 B, der WO 2006/024566 A1 und der DE 43 16 348 A1 beschrieben.

Schwierigkeiten bei der Auslegung von Empfängeroptiken für Entfernungsmesser bereitet die Vorgabe, dass die Entfernungsmesser sowohl zum präzisen Messen im Nah- als auch im Fernbereich einsetzbar sein sollen. Probleme beim Messen von großen Entfernungen bereiten Fremdlichteinflüsse, die sich negativ auf das Signal-Rausch-Verhältnis auswirken. Üblicherweise wird zur Reduzierung des Fremdlichteinflusses die Größe des zum Einsatz kommenden Fotodetektors so gut wie möglich auf die Größe des von weit entfernten Objekten reflektierten Lichtpunktes abgestimmt. Bei Nahfeldmessungen besteht u.a. das Problem, dass sich ein Parallaxwinkel zwischen einem ausgesendeten Lichtstrahl und einem empfangenen Lichtstrah vergleichsweise stark auf das Messergebnis auswirkt. Der Parallaxwinkel ist darauf zurückzuführen, dass das Sendelinsensystem benachbart zum Empfängerlinsensystem angeordnet ist. Ein weiteres, wesentliches Problem bei der Auslegung von Entfernungsmessern, die sowohl für den Nah- als auch für den Fernbereich einsetzbar sein sollen, besteht darin, dass bei großen Entfernungen, die empfangene optische Leistung proportional zur inversen Distanz im Quadrat ist. Dies resultiert in der Notwendigkeit das Empfangssystem zum Verarbeiten schwacher Signale auszulegen. Die starke Zunahme der empfangenen Laserleistung bei kurzen Entfernungen führt zur selben Zeit jedoch dazu, dass das Empfangssystem vergleichsweise ineffizient für kurze Entfernungen ausgelegt werden muss, um eine Sättigung der elektronischen Detektionsschaltung zu verhindern.

Offenbarung der Erfindung

Der Erfindung liegt die Aufgabe zugrunde, eine Empfängerlinse vorzuschlagen, die sowohl für den Messeinsatz im Nah- als auch im Fernbereich geeignet ist. Ferner besteht die Aufgabe darin, einen optischen Entfernungsmesser mit einer entsprechend verbesserten optischen Empfängerlinse bereitzustellen.

Diese Aufgabe wird hinsichtlich der optischen Empfängerlinse mit den Merkmalen des Anspruchs 1 und hinsichtlich des optischen Entfernungsmessers mit den Merkmalen des Anspruchs 5 gelöst. Vorteilhafte Weiterbildungen der Erfindung sind in den abhängigen Ansprüchen angegeben.

Der Erfindung liegt der Gedanke zugrunde, zumindest einen nicht-sphärischen Flächenabschnitt der Linsenoberfläche, vorzugsweise einen nicht-sphärischen Flächenabschnitt einer dem reflektierenden Objekt zugewandten Linsenoberfläche, derart auszubilden, dass dieser durch Addition von mindestens zwei, vorzugsweise von ausschließlich zwei, Flächen erhalten wird, nämlich einer ersten Fläche, deren Durchbiegung entlang der z-Achse, also deren Erstreckung entlang der z-Achse sowohl eine Funktion von x und y, insbesondere des Radiuses ($r^2=x^2+y^2$) und einer zweiten Fläche, deren Durchbiegung entlang der z-Achse ausschließlich eine Funktion von x, d.h. nicht von y ist. Besonders bevorzugt wird der nicht-sphärische Flächenabschnitt dabei derart ausgebildet, dass das Verhältnis zwischen der von der optischen Empfängerlinse empfangenen optischen Leistung und der von einem Fotodetektor erfassten optischen Leistung mit zunehmendem Abstand ansteigt, bis ein konstantes Verhältnis, von vorzugsweise über 90% erreicht wird. Dies führt dazu, dass die optische Leistung auf dem Fotodetektor, d.h. die Detektorschaltung auch im Nahbereich nicht gesättigt ist und zu geringeren Distanzen hin abnimmt. Ein mit einer nach dem Konzept der Erfindung ausgebildeten optischen Empfängerlinse ausgestatteter Entfernungsmes-ser zeichnet sich durch ein optimiertes Signal-Rausch-Verhältnis aus. Die Empfängerlinse zeichnet sich ferner durch die Möglichkeit zum Einsatz für Messungen im Nah- sowie im Fernbereich aus. Insbesondere kann eine gute, stabile Signalamplitude auch bei kurzen Entfernungsmessungen ohne weiteren Aufwand erhalten werden. Darüber hinaus besteht die Möglichkeit die Empfängerlinse kostengünstig aus Kunststoff auszubilden. Ferner wirkt sich ein bevorzugt realisierter Parallaxwinkel zwischen einem Empfängerstrahlengang und einem Sendestrahlengang nur unwesentlich auf das Messergebnis aus.

In Weiterbildung der Erfindung ist mit Vorteil vorgesehen, dass die die Durchbiegung der ersten Fläche entlang der z-Achse beschreibende erste Funktion und/oder die die Durchbiegung der zweiten Fläche entlang der z-Achse beschreibende zweite Funktion mindestens einfach stetig differenzierbar ist/sind. Hierdurch kann die Linsenoberfläche vereinfacht gefertigt werden. Besonders vorteilhaft ist es, wenn die die Durchbiegung beschreibenden Funktionen mindestens zweifach stetig differenzierbar sind.

In Weiterbildung der Erfindung ist mit Vorteil vorgesehen, dass zusätzlich zu der ersten und der zweiten Funktion zur Beschreibung des nicht-sphärischen Flächenabschnittes oder eines Unterflächenabschnitts des nicht-sphärischen Flächenabschnitts mindestens eine dritte Fläche addierbar ist, deren Durchbiegung entlang der z-Achse durch eine dritte Funktion beschreibbar ist, beispielsweise durch eine von x und y abhängige Funktion, wie z.B.:

$$sag(x,y) = \frac{f(x) \cdot y^2}{1 + \sqrt{1 - f(x)^2 \cdot y^2}}$$

Ganz besonders bevorzugt ist es, wenn der wie zuvor beschrieben ausgebildete nicht-sphärische Flächenabschnitt der Linsenoberfläche auf einer dem reflektierenden Objekt zugewandten Empfängerlinsenseite angeordnet ist.

Die Erfindung führt auch auf einen optischen Entfernungsmesser, insbesondere einen Laser-Entfernungsmesser mit einer wie zuvor beschrieben ausgebildeten optischen Empfängerlinse. Der optische Entfernungsmesser kann in an sich bekannter Weise auf Basis interferrometrischer Messungen und/oder auf Basis von Laufzeitmessungen arbeitend ausgebildet sein.

Bevorzugt ist eine Ausführungsform des Entfernungsmessers, bei der die optische Empfängerlinse die einzige Empfängerlinse im Empfangsstrahlengang ist. Ganz besonders bevorzugt sind zusätzlich zu der einzigen Empfängerlinse keine weiteren optischen Elemente, wie Spiegel, etc. vorgesehen.

Besonders bevorzugt ist eine Ausführungsform des Entfernungsmessers, bei der der Empfangsstrahlengang unter einem Parallaxwinkel zu einem Sendestrahlengang angeordnet ist, wobei der Sendestrahlengang ganz besonders bevorzugt von der x-Achse des die Empfangslinse beschreibenden, dreidimensionalen Koordinatensystems senkrecht geschnitten wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

Fig. 1:        eine Draufsicht auf eine dreidimensionale, einem nicht gezeigten reflektierenden Objekt zugewandten, Linsenoberfläche einer optischen Empfängerlinse,

Fig. 2a u. Fig. 2b:   zwei um 90° gedrehte Ansichten einer optischen Empfängerlinse, wobei aus den Ansichten die Lage eines dreidimensionalen Koordinatensystems mit den Achsen x, y und z deutlich wird,

Fig. 3:        eine mögliche Anordnung einer optischen Empfängerlinse in einem Entfernungsmesser,

Fig. 4a:       ein Diagramm, in dem das Verhältnis aus der von der optischen Empfängerlinse empfangenen optischen Leistung und der von einem Fotodetektor erfassten optischen Leistung über die zu messende Entfernung aufgetragen ist,

Fig. 4b:       ein weiteres Diagramm, das die auf dem Fotodetektor auftreffende optische Leistung über die zu messenden Entfernung zeigt,

Fig. 5:        eine optische Linse mit einem nicht-sphärischen Flächenabschnitt und

Fig. 6:        eine Beschreibung einer zweiten, ausschließlich von x abhängigen Funktion durch stückweise aneinandergehängte Polynome zweiter Ordnung.

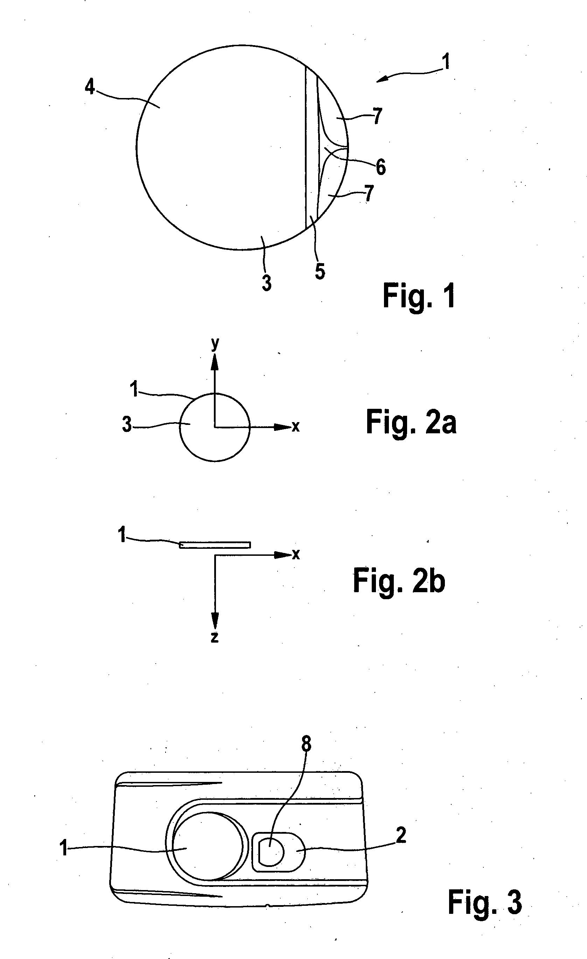

Fig. 1 zeigt eine optische Empfängerlinse 1 für einen in Fig. 3 dargestellten, als Laser-Entfernungsmesser ausgebildeten Entfernungsmesser 2. Eine dem reflektierenden nicht gezeigten Objekt, dessen Entfernung mittels des Entfernungsmessers 2 bestimmt werden soll, zugewandte dreidimensionale Linsenoberfläche 3 umfasst einen in der Zeichnungsebene linken, sphärischen Abschnitt 4, einen in der Zeichnungsebene rechts daran angrenzenden nicht-sphärischen Flächenabschnitt 5 für mittlere Distanzen und einen wiederum an letzteren Flächenabschnitt 5 angrenzenden, nicht-sphärischen Flächenabschnitt 6 für kurze Distanzen. Die mit dem Bezugszeichen 7 gekennzeichneten Flächenabschnitte haben keine Empfangsfunktion.

Aus den Fig. 2a und 2b ist die Lage einer Empfängerlinse 1 in einem dreidimensionalen, drei rechtwinklig zueinander verlaufende Achsen (x, y, z) umfassenden, Koordinatensystem ersichtlich. Zu erkennen ist, dass die x-Achse und die yAchse die Flächenerstreckung der Linsenoberfläche 3 charakterisieren, wohingegen die z-Achse, die senkrecht auf der Flächenerstreckung der Linsenoberfläche steht mit der optischen Achse der Empfängerlinse 1 zusammenfällt.

Aus Fig. 3 ergibt sich eine mögliche Anordnung der vorzugsweise aus Kunststoff ausgebildeten Empfängerlinse 1 in einem Entfernungsmesser 2. Zu erkennen ist, dass die Empfängerlinse 1 links neben einer Linse 8 eines Sendestrahlengangs angeordnet ist, was zu einem nicht eingezeichneten, an sich bekannten Parallaxwinkel zwischen dem Sendestrahlengang und einem durch die Empfängerlinse 1 strahlenden Empfangsstrahlengang führt.

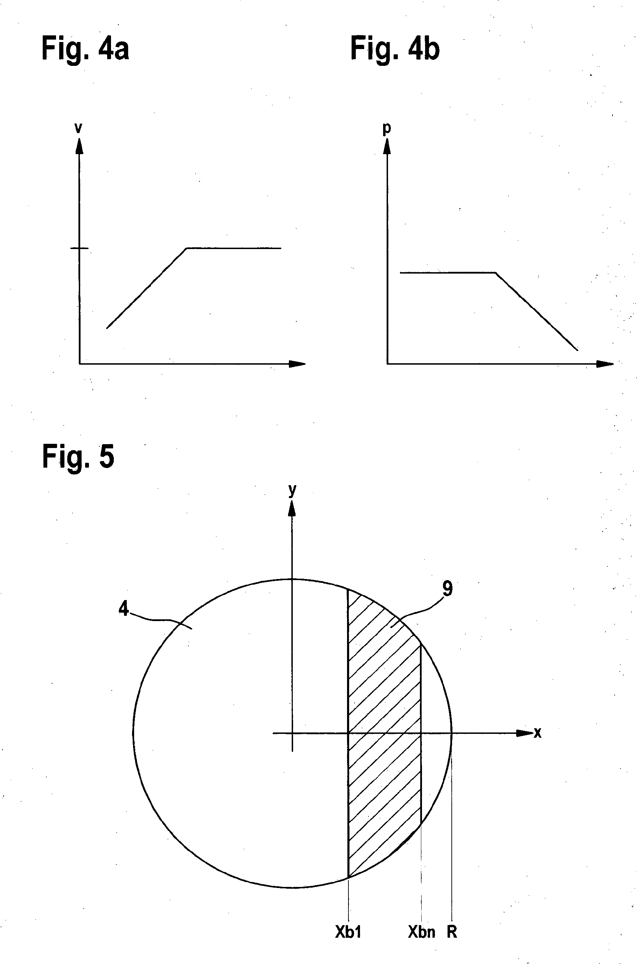

Fig. 4a zeigt ein Diagramm, bei dem auf der Ordinate logarhythmisch ein Verhältniswert v, aus einer von der Empfängerlinse 1 empfangenden optischen Leistung und einer von einem Fotodetektor empfangenen optischen Leistung aufgetragen ist und in dem auf der Abszisse logarhythmisch die Entfernung aufgetragen ist. Zu erkennen ist, dass der Verhältniswert V in der logarhythmischen Darstellung linear mit der Steigung 2 ansteigt, idealerweise bis auf 100% (in der Praxis kleiner als 100%, jedoch größer als 90%) und dann konstant bleibt. Hieraus resultiert, wie aus dem Diagramm gemäß Fig. 4b zu entnehmen ist, dass die optische Leistung P des Fotodetektors zunächst, d.h. im Nahbereich konstant ist und ab einem bestimmten Distanzwert abnimmt. Auch bei dem Diagramm gem. Fig. 4b handelt es sich um logarhythmische Koordinatenachsen.

Allgemein ist festzuhalten, dass sich die Durchbiegung entlang der z-Achse bei einer nach dem Konzept der Erfindung ausgebildeten Empfängerlinse bestimmen lässt durch die Addition einer ersten Funktion $f_1(x+y)$ und einer zweiten Funktion $f_2(x)$. Also als Summe einer ersten Funktion, die abhängig ist von $\sqrt{x^2 + y^2}$ und einer zweiten Funktion, die ausschließlich abhängig ist von x und nicht von y.

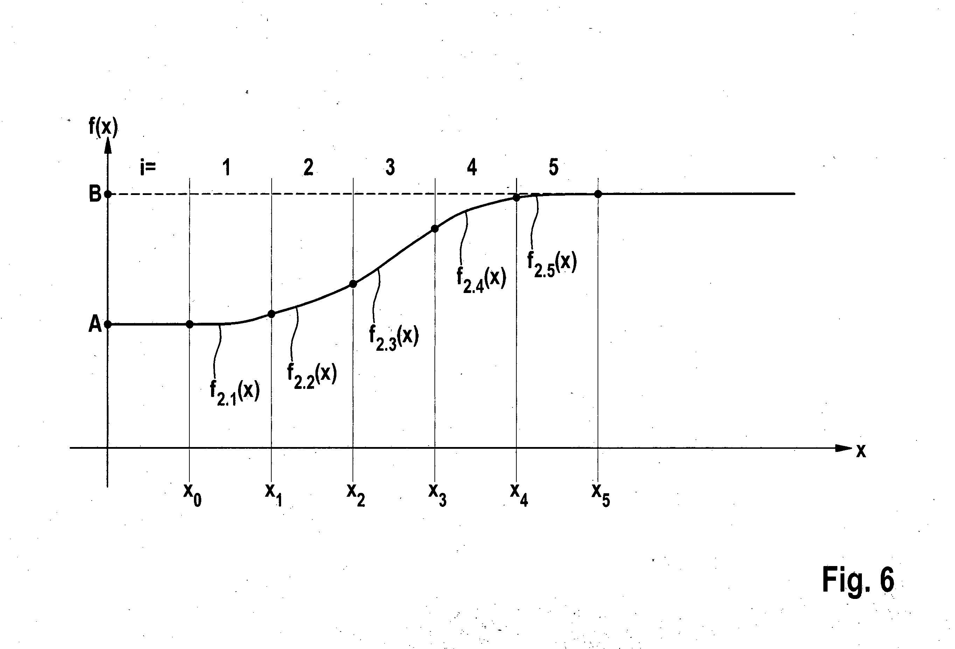

Anhand der Fig. 5 und 6 wird im Folgenden ein Beispiel für eine erste und eine zweite Funktion erläutert. Durch Addition dieser Funktionen $f_1$, $f_2$ ist die Durchbiegung des in Fig. 5 mit dem Bezugszeichen 9 gekennzeichneten nichtsphärischen Flächenabschnitts entlang der z-Achse beschrieben. In der Zeichnungsebene links neben dem nicht sphärischen Flächenabschnitt 9 befindet sich ein sphärischer Flächenabschnitt 4 für den Fernbereich.

Gemäß einer bevorzugten Ausführungsform lautet die erste Funktion

$$z_1 = f_1(x, y) = d - \frac{r^2}{R_0 \cdot \left(1 + \sqrt{1 - e \cdot \frac{r^2}{R_0^2}}\right)}.$$

Die Variable $r^2$ (r=Radius) kann substituiert werden durch $x^2+y^2$.

In der ersten Funktion $f_1$ sind:

d: ein Linsendickenparameter,

$R_0$: ein sphärischer Parameter des Basis-Krümmungsradius der Linsenoberfläche

e: ein konischer Parameter und

$z_1$: die Durchbiegung der ersten Fläche entlang des Abstands vom Vertex der Linse in der x-y-Ebene.

Die zweite Funktion $f_2$ lautet:

$$z_2 = f_2(x).$$

Die zweite Funktion $f_2(x)$ kann beispielsweise durch N stückweise aneinandergehängte Funktionen definiert werden:

$$f_2(x) \equiv \begin{array}{ll} f_{2,1}(x) & \forall\, x \in [x_0 \mathrm{K}\, x_1] \\ M \\ f_{2,N}(x) & \forall\, x \in [x_{N-1}\mathrm{K}\, x_N], \end{array}$$

wobei die stückweise definierten Funktionsabschnitte $f_{2,i}$ durch Polynome zweiter Ordnung gegeben sind:

$$f_{2,i}(x) \equiv a_{i,0} + a_{i,1} \cdot x + a_{i,2} \cdot x^2.$$

Die Forderung, dass die auf diese Weise zusammengesetzte Funktion $f_2(x)$ mindestens einmal stetig differenzierbar ist, führt auf folgende 2(N+1) Bedingungen:

$$f_{2.1}(x_0) \equiv A$$
$$f_{2,i}(x_i) \equiv f_{2,i+1}(x_i) \quad \forall \, i = 1\mathrm{K}\,N-1$$
$$f_{2.N}(x_N) \equiv B$$

$$f'_{2.1}(x_0) \equiv 0$$
$$f'_{2,i}(x_i) = f'_{2,i+1}(x_i) \quad \forall \, i = 1\mathrm{K}\,N-1$$
$$f'_{2.N}(x_N) \equiv 0$$

Die verbleibenden $N$-2 Parameter stehen als Optimierungsparameter für das Linsendesign zur Verfügung.

Die Durchbiegung des nicht-sphärischen Flächenabschnitts 9 wird also erhalten durch Addition der Durchbiegungen $z_1$ und $z_2$ der ersten und zweiten Fläche:

$$z = z_1 + z_2 = f_1(x,y) + f_2(x) = d - \frac{r^2}{R_0\left(1 + \sqrt{1 - e \cdot \frac{r^2}{R_0^{\,2}}}\right)} + f_2(x)$$

## Patentansprüche

1. Optische Empfängerlinse mit einer dreidimensionalen Linsenoberfläche (3), zum Empfangen der an einem Objekt reflektierten Laserstrahlung eines Laserentfernungsmessers (2), wobei die Empfängerlinse (1) in einem dreidimensionalen, drei rechtwinklig zueinander angeordnete Achsen x, y, z aufweisenden Koordinatensystem beschreibbar ist, und wobei die z-Achse mit der optischen Achse der Empfängerlinse (1) zusammen fällt, **dadurch gekennzeichnet, dass** die dreidimensionale Linsenoberfläche (3) mehrere Flächenabschnitte aufweist, wobei die Durchbiegung entlang der z-Achse zumindest eines nichtsphärischen Flächenabschnitts (9) der dreidimensionalen Linsenoberfläche (3) beschreibbar ist durch Addition einer ersten Funktion $f_1$, die abhängig ist von $\sqrt{(x^2 + y^2)}$, und einer zweiten Funktion $f_2$, die ausschließlich von x und nicht von y abhängig ist.

2. Optische Empfängerlinse nach Anspruch 1,
**dadurch gekennzeichnet,**
**dass** die erste und/oder die zweite Funktion ($f_1$, $f_2$) mindestens einfach stetig differenzierbar ist/sind.

3. Optische Empfängerlinse nach einem der vorhergehenden Ansprüche,
**dadurch gekennzeichnet,**
**dass** der nicht-sphärische Flächenabschnitt (9) der Linsenoberfläche (3) oder ein Unterflächenabschnitt des nicht-sphärischen Flächenabschnitts (9) beschreibbar ist durch zusätzliche Addition einer dritten Fläche deren Durchbiegung entlang der z-Achse eine dritte Funktion, insbesondere von x und/oder y, ist.

4. Optische Empfängerlinse nach einem der vorhergehenden Ansprüche,
**dadurch gekennzeichnet,**
**dass** der nicht-sphärische Flächenabschnitt (9) auf einer dem reflektierenden Objekt zugewandten Empfängerlinsenseite angeordnet ist.

5. Optischer Entfernungsmesser, insbesondere Laser-Entfernungsmesser, mit einer optischen Empfängerlinse (1) nach einem der vorhergehenden Ansprüche.

6. Optischer Entfernungsmesser nach Anspruch 5,
**dadurch gekennzeichnet,**
**dass** die optische Empfängerlinse (1) die einzige Empfängerlinse (1) und/oder das einzige optische Element im Empfangsstrahlengang ist.

7. Optischer Entfernungsmesser nach einem der Ansprüche 5 oder 6,

**dadurch gekennzeichnet,**

**dass** der Empfangsstrahlengang unter einem Parallaxwinkel zu einem Sendestrahlengang angeordnet ist.

8. Optischer Entfernungsmesser nach Anspruch 7,
   **dadurch gekennzeichnet,**
   **dass** die optische Empfängerlinse (1) derart angeordnet ist, dass der Sendestrahlengang von der x-Achse geschnitten wird.

**Claims**

1. Optical receiver lens having a three-dimensional lens surface (3), for receiving the laser radiation, reflected at an object, of a laser distance measuring device (2), it being possible to describe the receiver lens (1) in a three-dimensional coordinate system having three axes x, y, z arranged at right angles to one another, and the z-axis coinciding with the optical axis of the receiver lens (1), **characterized in that** the receiver lens (1) has a plurality of surface sections, it being possible to describe at least one aspheric surface section (9) of the lens surface (3) by the addition of a first surface, whose sag along the z-axis is a first function $f_1$ of $\sqrt{x^2 + y^2}$, and of a second surface, whose sag along the z-axis is a second function $f_2$ of x and not of y.

2. Optical receiver lens according to Claim 1, **characterized in that** the first and/or the second function ($f_1$, $f_2$) are/is at least once continuously differentiable.

3. Optical receiver lens according to one of the preceding claims, **characterized in that** the aspheric surface section (9) of the lens surface (3), or a surface subsection of the aspheric surface section (9) can be described by the supplementary addition of a third surface, whose sag along the z-axis is a third function, in particular of x and/or y.

4. Optical receiver lens according to one of the preceding claims, **characterized in that** the aspheric surface section (9) is arranged on a receiver lens side facing the reflecting object.

5. Optical distance measuring device, in particular laser distance measuring device, having an optical receiver lens (1) according to one of the preceding claims.

6. Optical distance measuring device according to Claim 5, **characterized in that** the optical receiver lens (1) is the single receiver lens (1) and/or the single optical element in the receiving beam path.

7. Optical distance measuring device according to either of Claims 5 and 6, **characterized in that** the receiving beam path is arranged at a parallax angle to a transmit beam path.

8. Optical distance measuring device according to Claim 7, **characterized in that** the optical receiver lens (1) is arranged in such a way that the transmit beam path is intersected by the x-axis.

**Revendications**

1. Lentille optique de réception comportant une surface de lentille tridimensionnelle (3) destinée à recevoir un rayonnement laser d'un télémètre laser (2), réfléchi sur un objet, dans lequel la lentille de réception (1) peut être décrite dans un système de coordonnées tridimensionnel comprenant trois axes x, y, z disposés perpendiculairement les uns aux autres, et dans lequel l'axe z coïncide avec l'axe optique de la lentille de réception (1), **caractérisé en ce que** la lentille de réception (1) comprend une pluralité de sections de surface, dans laquelle au moins une section de surface non sphérique (9) de la surface de lentille (3) peut être décrite par addition d'une première surface dont la courbure le long de l'axe z est une première fonction $f_1$ de $\sqrt{x^2 + y^2}$, et d'une deuxième surface dont la courbure le long de l'axe z est une seconde fonction $f_2$ de x et non de y.

2. Lentille optique de réception selon la revendication 1, **caractérisée en ce que** la première et/ou la seconde fonction (s) ($f_1$, $f_2$) est/sont au moins simplement continument différentiable(s).

**3.** Lentille optique de réception selon l'une quelconque des revendications précédentes, **caractérisée en ce que** la section de surface non sphérique (9) de la surface de lentille (3) ou un section de surface inférieure de la section de surface non sphérique (9) peut être décrite par l'addition supplémentaire d'une troisième surface dont la courbure le long de l'axe z est une troisième fonction, notamment de x et/ou de y.

**4.** Lentille optique de réception selon l'une quelconque des revendications précédentes, **caractérisée en ce que** la section de surface non sphérique (9) est disposée d'un côté de la lentille de réception qui est tourné vers l'objet réfléchissant.

**5.** Télémètre optique, notamment, télémètre laser, comportant une lentille optique de réception (1) selon l'une quelconque des revendications précédentes.

**6.** Télémètre optique selon la revendication 5, **caractérisé en ce que** la lentille optique de réception (1) est la seule lentille de réception (1) et/ou le seul élément optique sur le chemin du faisceau de réception.

**7.** Télémètre optique selon l'une des revendications 5 ou 6, **caractérisé en ce que** le chemin du faisceau de réception est disposé sous un angle de parallaxe par rapport à un chemin du faisceau d'émission.

**8.** Télémètre optique selon la revendication 7, **caractérisé en ce que** la lentille optique de réception (1), est disposée de manière à ce que le chemin du faisceau d'émission soit coupé par l'axe x.

**Fig. 1**

**Fig. 2a**

**Fig. 2b**

**Fig. 3**

# Fig. 4a

# Fig. 4b

# Fig. 5

Fig. 6

EP 2 379 983 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070030474 A1
- WO 03002939 A1
- DE 10051302 C5
- WO 2005064359 A1
- EP 00701702 B
- WO 2006024566 A1
- DE 4316348 A1